Europäisches Patentamt

European Patent Office

Office européen des brevets

(19)

(11) Veröffentlichungsnummer : **0 130 574**
**B1**

(12) **EUROPÄISCHE PATENTSCHRIFT**

(45) Veröffentlichungstag der Patentschrift :
30.09.87

(51) Int. Cl.⁴ : **G 01 N 30/86**

(21) Anmeldenummer : **84107477.6**

(22) Anmeldetag : **28.06.84**

(54) Einrichtung zum Kompensation der Basisliniendrift einer chromatographischen Trennsäule.

(30) Priorität : **01.07.83 DE 3323744**

(43) Veröffentlichungstag der Anmeldung :
**09.01.85 Patentblatt 85/02**

(45) Bekanntmachung des Hinweises auf die Patenterteilung : **30.09.87 Patentblatt 87/40**

(84) Benannte Vertragsstaaten :
**CH DE FR GB IT LI**

(56) Entgegenhaltungen :
**US-A- 3 590 628**
**US-A- 3 797 300**
**US-A- 4 170 893**

(73) Patentinhaber : **Bodenseewerk Perkin-Elmer & Co.**
**GmbH**
**Alte Nussdorfer Strasse 15 Postfach 1120**
**D-7770 Überlingen/Bodensee (DE)**

(72) Erfinder : **Pospisil, Peter**
**Magnolienweg 8**
**D-7770 Überlingen (DE)**
Erfinder : **Kolb, Bruno, Dr.**
**Im Weingärtle 16**
**D-7776 Owingen (DE)**

(74) Vertreter : **Weisse, Jürgen, Dipl.-Phys. et al**
**Patentanwälte Dipl.-Phys. Jürgen Weisse Dipl.-Chem.**
**Dr. Rudolf Wolgast Bökenbusch 41 Postfach 11 03 86**
**D-5620 Velbert 11 Langenberg (DE)**

EP 0 130 574 B1

# 0 130 574

**Beschreibung**

Die Erfindung betrifft eine Einrichtung zur Kompensation der Basisliniendrift einer chromatographischen Trennsäule während eines Temperatur- und/oder Strömungsprogramms, enthaltend

(a) Programmgebermittel, durch welche die Trennsäule mit vorgebbaren Temperatur- und/oder Strömungsprogrammen beaufschlagbar ist,

(b) Testlaufmittel zur Erzeugung eines ersten Temperatur- und/oder Strömungsprogrammes ohne Probenaufgabe zur Bestimmung einer für die Trennsäule charakteristischen temperatur- und strömungsabhängigen Basislinie,

(c) einen Speicher, in welchem Daten dieser so bestimmten Basislinie speicherbar sind und

(d) differenzbildende Mittel, auf welche bei anschließender Durchführung eines zweiten Temperatur- und/oder Strömungsprogrammes mit Probenaufgabe und mit der gleichen Trennsäule

— einen dem Ausgang der Trennsäule entsprechendes Meßsignal sowie

— ein aus den gespeicherten Daten gewonnenes Basisliniesignal zur Korrektur des Meßsignals aufschaltbar ist.

Durch Chromatographie (Gas- oder Flüssigkeitschromatographie) werden Gemische getrennt. Eine Trensäule enthält eine Trennsubstanz, die mit den einzelnen Bestandteilen eines zu untersuchenden Gemisches mehr oder weniger stark in Wechselwirkung tritt. In vielen Fällen ist die Trennsubstanz eine Flüssigkeit als stationäre Phase, in welcher die Bestandteile des zu untersuchenden Gemisches mehr oder weniger leicht lösbar sind. Durch die Trennsäule wird ein Trägermedium (Trägergas oder Trägerflüssigkeit) mit einer bestimmten Strömungsgeschwindigkeit geleitet. Das zu untersuchende Gemisch wird auf den Eingang der Trennsäule gegeben und von dem Trägermedium durch die Trennsäule hindurchtransportiert. Dabei wandert ein Bestandteil, der beispielsweise in einer flüssigen stationären Phase leicht lösbar ist, langsamer durch die Trennsäule als ein Bestandteil, der in dieser stationären Phase schwerer löslich oder flüchtiger ist. Eine als « Paket » am Eingang der Trennsäule aufgegebene Probe löst sich daher auf ihrem Weg durch die Trennsäule auf in die einzelnen Bestandteile des Gemischs, die mehr oder weniger schnell durch die Trennsäule wandern und zeitlich nacheinander am Ausgang der Trennsäule erscheinen. Dort ist ein Detektor angeordnet, der auf austretende Bestandteile der Probe anspricht und entsprechende Signale liefert. Der zeitliche Verlauf des Detektorsignals, das Chromatogramm, zeigt eine Folge von Banden oder Peaks, von denen jeder einem Bestandteil des Gemisches entspricht.

Bestimmte Bestandteile einer Probe wandern im Vergleich zu anderen Bestandteilen nur sehr langsam durch die Trennsäule. Wenn man daher mit einer konstanten Temperatur und Strömungsgeschwindigkeit arbeitet, welche eine saubere Trennung der leichtflüchtigen Bestandteile gewährleistet, dann dauert es sehr lange, bis auch die schwerflüchtigen Bestandteile erscheinen. Dadurch wird die Analysenzeit verlängert. Außerdem ist mit der Verlängerung der Analysenzeit eine unerwünschte Verbreiterung der Banden oder Peaks verbunden. Um diese Nachteile zu vermeiden, ist es daher bekannt, die Temperatur und ggf. die Strömungsgeschwindigkeit nach einem vorgegebenen Programm zu verändern. Wenn nach einem bestimmten Programm die Temperatur der Trennsäule mit der Zeit erhöht wird, dann werden schwerflüchtige Bestandteile nach dem Durchgang der leichtflüchtigen Bestandteile aus der Trennsäule schneller ausgetrieben. In gleichem Sinne wirkt eine zeitabhängige Erhöhung der Strömungsgeschwindigkeit.

Der Detektor liefert auch ein Signal, wenn keine Probe auf die Trennsäule aufgegeben wird. Bei konstanter Temperatur und konstanter Strömungsgeschwindigkeit ist dieses Signal konstant. In einer Aufzeichnung des Chromatogramms ergibt dieses Signal eine gerade, horizontale Basislinie, auf welche die Peaks bezogen werden können. Bei einem Temperatur- oder Strömungsgeschwindigkeitsprogramm verändert sich jedoch das « Basisliniensignal » mit einer Veränderung der Temperatur oder der Strömungsgeschwindigkeit. Diese Veränderung des Basisliniensignals muß bei der Auswertung des Chromatogramms berücksichtigt werden. Es ist zu diesem Zweck bekannt, zusätzlich zu der für die Trennung des Gemischs verwendeten « aktiven » Trennsäule eine gleichartige Referenztrennsäule vorzusehen, welche ohne Probe aber im übrigen unter den gleichen Bedingungen betrieben wird wie die aktive Trennsäule (Schomburg « Gaschromatographie » S. 49-51). Das vom Ausgang der aktiven Trennsäule erhaltene Detektorsignal wird durch das Detektorsignal vom Ausgang der Referenztrennsäule korrigiert. Eine solche Anordnung ist aufwendig. Es müssen jeweils zwei identisch ausgebildete Trennsäulen mit Detektoren vorgesehen und in einem entsprechend bemessenen Ofen untergebracht werden. Eine Voraussetzung für eine einwandfreie Basis-linienkompensation sind weiterhin die genau übereinstimmende, programmierte Betriebsbedingungen. Dieses Erfordernis kann zu Meßfehlern führen.

Es ist weiterhin durch die US-A-3 590 628 bekannt, bei einem Testlauf ohne Probe mit dem vorgegebenen Temperatur- oder Strömungsgeschwindigkeitsprogramm den Verlauf der Basislinie zu speichern.

Bei dem anschließenden Meßlauf wird der gespeicherte Wert der Basislinie jeweils von dem Meßsignal subtrahiert. Das erfordert einen Speicher hoher Kapazität. Bei einer Änderung des Programms

2

muß jedesmal die Basislinie neu aufgenommen und gespeichert werden.

Der Erfindung liegt die Aufgabe zugrunde, ein Einrichtung der eingangs definierten Art zur Kompensation der Basisliniendrift so auszubilden, daß nach einem einzigen Testlauf ohne Probenaufgabe eine Korrektur des Meßsignals durch ein Basisliniensignal bei Durchführung unterschiedlicher Temperatur- und/oder Strömungsprogramme mit der gleichen Trennsäule erfolgen kann, ohne daß für jedes dieser Temperatur- und/oder Strömungsprogramme ein gesonderter Testlauf zur Bestimmung der zugehörigen Basislinie durchgeführt werden muß.

Erfindungsgemäß wird diese Aufgabe gelöst, durch

(a) Rechnermittel

auf welche von den Testlaufmitteln die Programmparameter des ersten Temperatur- und/oder Strömungsprogrammes sowie

das mit diesem Temperatur- und Strömungsprogramm ohne Probenaufgabe erhaltene, unkorrigierte Basisliniensignal aufgeschaltet sind und

welche zur Berechnung trennsäulenspezifischer Parameter der den Verlauf des Basisliniensignals darstellenden analytischen Funktion von bekannter Form eingerichtet ist, und

(b) Funktionsgeneratormittel

auf welche die von den Rechnermitteln berechneten, trennsäulenspezifischen Parameter aufschaltbar sind und

durch welche das Basisliniensignal als die besagte analytische Funktion der Zeit, der Programmparameter des von den Programmgebermitteln bestimmten Temperatur- und/oder Strömungsprogrammes und der trennsäulenspezifischen Parameter darstellbar ist.

Es wird somit nicht der gesamte empirisch bestimmte Verlauf der Basislinie gespeichert, wie dies bei der US-A-3 590 629 geschieht. Die Erfindung geht vielmehr von der Erkenntnis aus, daß die Basislinie sich nach physikalischen Gesetzen als analytische Funktion der Zeit und einmal der Programmparameter — d. h. z. B. Betrag und Dauer der verschiedenen programmierten Temperaturen oder Strömungsraten und Anstiegsraten zwischen aufeinanderfolgenden programmierten Temperaturen oder Strömungsraten — sowie zum anderen von trennsäulenspezifischen Parametern darstellt. Dementsprechend ist statt eines Speichers für die gesamte Basislinie ein Funktionsgenerator vorgesehen, welcher bei Eingabe von Programmparametern und trennsäulenspezifischen Parametern ein Basisliniensignal als Funktion der Zeit gemäß dieser vorgegebenen analytischen Funktion liefert. Es ist weiterhin ein Rechner vorgesehen, welcher aus einem Basisliniensignal eines Testlaufs mit einem vorgegebenen ersten Temperatur- und/oder Strömungsprogramm die trennsäulenspezifischen Parameter der besagten analytischen Funktion bestimmt. Diese Parameter werden gespeichert und auf den Funktionsgenerator aufgeschaltet. Der Funktionsgenerator ist dann in der Lage, ohne weitere Testläufe für die gleiche Trennsäule ein Basislininensignal nicht nur für das gleiche Temperatur- und/oder Strömungsprogramm sondern auch für andere Programme zu erzeugen.

Ein Ausführungsbeispiel der Erfindung ist nachstehend unter Bezugnahme auf die zugehörigen Zeichnungen näher erläutert.

Figur 1 zeigt ein Blockschaltbild einer Einrichtung zur Kompensation der Basisliniendrift einer chromatographischen Trennsäule bei einem Temperaturprogramm.

Figur 2 veranschaulicht ein Temperaturprogramm zur Bestimmung der Parameter der Basislinienfunktion.

Figur 3 veranschaulicht den zugehörigen Verlauf der Basislinie.

Figur 4 zeigt ein Modell der Trennsäule als dynamisches System mit einer Zeitkonstante.

Figur 5 veranschaulicht einen Teil des Temperaturprogramms mit einem linearen Anstieg und einer anschließenden Zeitspanne konstanter Temperatur sowie die zugehörige Säulentemperatur.

Figur 6 zeigt ein Temperaturprogramm, wie es für eine Messung benutzt wird.

Figur 7 zeigt den zugehörigen Basislinienverlauf und

Figur 8 zeigt den Verlauf des von dem Funktionsgenerator gelieferten Basisliniensignals.

Figur 9 zeigt ein Chromatogramm mit Temperaturprogramm ohne Kompensation der Basisliniendrift.

Figur 10 zeigt das gleiche Chromatogramm mit Kompensation der Basisliniendrift.

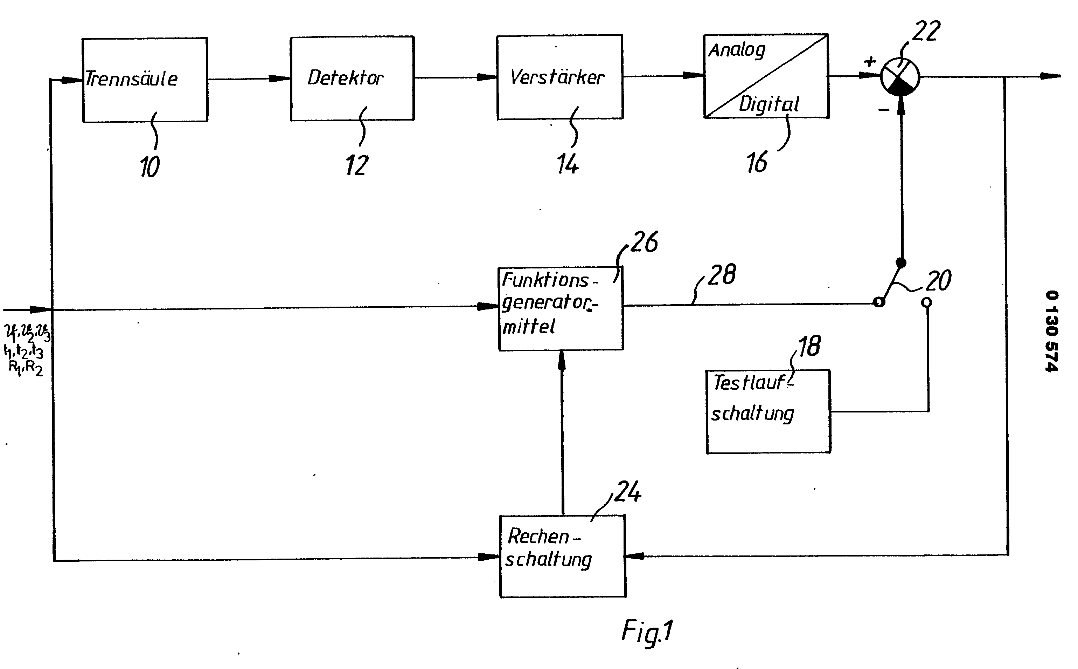

In Fig. 1 ist mit 10 eine Trennsäule bezeichnet, welche nach einem Temperaturprogramm aufgeheizt wird. Das Temperaturprogramm wird an einem Bediengerät eingegeben. Es ist charakterisiert durch drei Temperaturniveaus $\theta_1$, $\theta_2$ und $\theta_3$, die jeweils während der Zeitintervalle $t_1$, $t_2$ bzw. $t_3$ anstehen, und die Temperaturanstiegsraten $R_1$ und $R_2$, mit denen die Temperatur zwischen den Temperaturniveaus $\theta_1$ und $\theta_2$ bzw. $\theta_2$ bzw. $\theta_3$ ansteigt. Am Ausgang der Trennsäule 10 sitzt ein Detektor 12, der auf die aus der Trennsäule 10 austretenden Bestandteile eines als Probe aufgegebenen Gemischs anspricht. Die Probe wird auf den Eingang der Trennsäule 10 aufgegeben und durch ein Trägermedium in der eingangs beschriebenen Weise durch die Trennsäule 10 transportiert und dabei in ihre Bestandteile zerlegt. Der Detektor 12 liefert auch bei Abwesenheit von Probenbestandteilen, wie oben erläutert, ein Grundliniensignal. Das Signal des Detektors 12 wird durch einen Verstärker 14 verstärkt und mittels eines Analog-Digital-Wandlers 16 digitalisiert. Die Signalverarbeitung erfolgt bei der dargestellten, bevorzugten Ausführungsform digital mittels eines geeignet programmierten Mikroprozessors. Die Signalverarbeitung kann jedoch auch analog erfolgen.

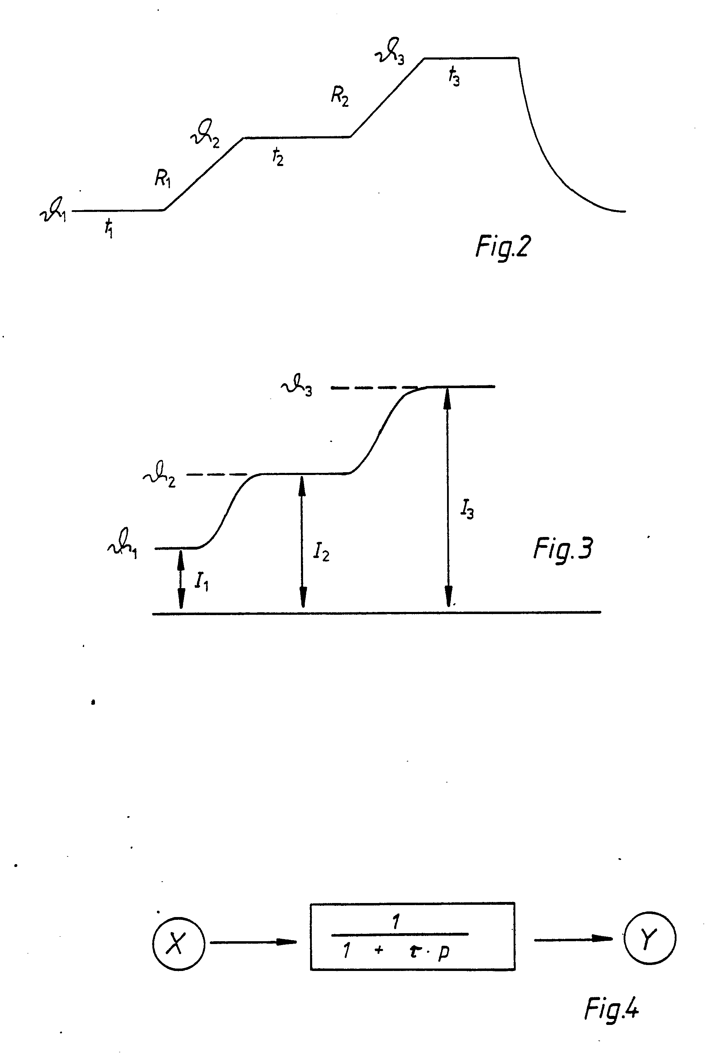

Es wird zunächst ein Testlauf durchgeführt, bei welchem keine Probe auf die Trennsäule 10 aufgegeben wird. Bei diesem Testlauf ist eine Testlaufschaltung 18 wirksam. Die Testlaufschaltung 18 gibt ein Temperaturprogramm für die Trennsäule 10 vor, wie es durch die Temperaturniveaus, $\theta_1$, $\theta_2$ und $\theta_3$, die Zeitintervalle $t_1$, $t_2$, $t_3$ und die Anstiegsraten $R_1$, $R_2$ definiert und in Fig. 2 dargestellt ist, und legt gleichzeitig über einen Schalter 20 das Signal « null » an differenzbildende Mittel 22, denen weiterhin der Ausgang des Analog-Digital-Wandlers 16 zugeführt wird. Die differenzbildenden Mittel liefern somit das unkorrigierte Detektorsignal, das den in Fig. 3 dargestellten Verlauf hat.

Dieses Detektorsignal wird auf eine Rechenschaltung 24 gegeben, der außerdem die Temperaturniveaus, $\theta_1$, $\theta_2$ und $\theta_3$, die Zeitintervalle $t_1$, $t_2$, $t_3$ und die Anstiegsraten $R_1$, $R_2$ zugeführt werden. Die Rechenschaltung 24 berechnet daraus in noch zu beschreibender Weise die Parameter der die Basislinie darstellenden Funktion. Diese Parameter werden in Funktionsgeneratormittel 26 eingegeben.

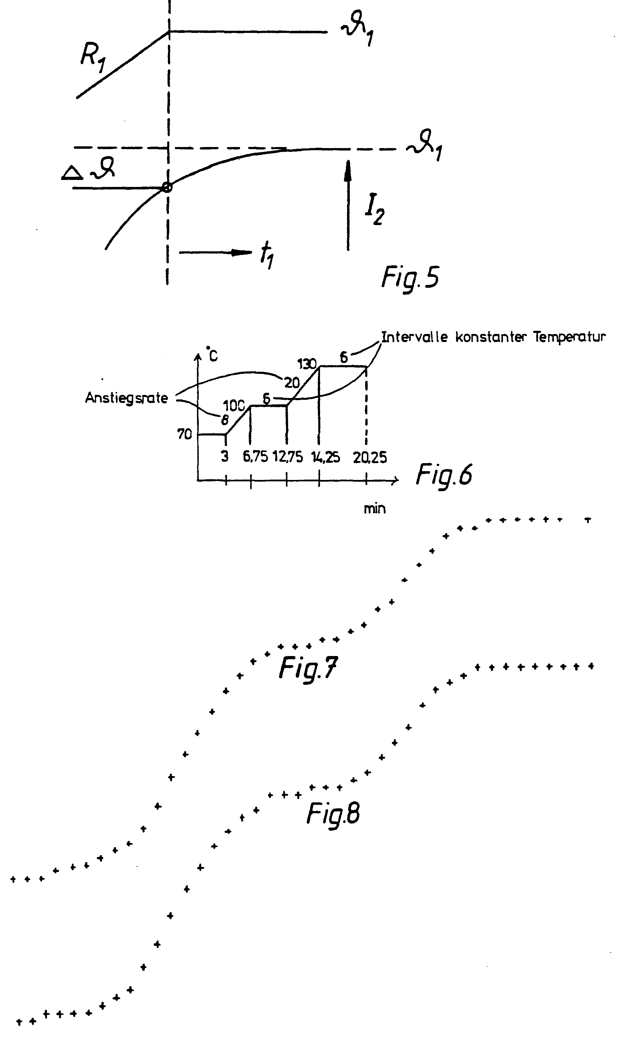

Die Funktionsgeneratormittel 26 sind während des beschriebenen Testlaufs nicht wirksam, wie in Fig. 1 durch den Schalter 20 angedeutet ist. Bei einem anschließenden Meßlauf, bei welchem eine Probe auf die Trennsäule 10 aufgegeben wird, erhalten die Funktionsgeneratormittel ebenfalls als Eingangssignale Temperaturniveaus $\theta_1$, $\theta_2$, $\theta_3$, Zeitintervalle $t_1$, $t_2$, $t_3$ und Anstiegsraten $R_1$, $R_2$ eines Temperaturprogramms (z. B. Fig. 6) und liefern an einem Ausgang 28 ein Signal nach der die Basislinie darstellenden Funktion.

Dieses Signal ist von gleicher Art wie das Meßsignal. Da das Meßsignal bei der bevorzugten Ausführungsform digitalisiert ist, liefern auch die Funktionsgeneratormittel ein Signal in digitaler Form. Dieses Signal von den Funktionsgeneratormitteln 26 wird durch die differenzbildenden Mittel 22 von dem Meßsignal subtrahiert. Die differenzbildenden Mittel 22 stellen Mittel zur Korrektur des Meßsignals mit dem Basis-liniensignal dar.

Die Parameter der die Basislinie darstellenden Funktion werden in der Rechenschaltung 24 auf folgende Weise berechnet.

Der z. B. von einem Gaschromatographie-Detektor gelieferte Untergrundstrom hängt von Ausbluten der Trennsäule und somit von der Art der flüssigen stationären Phase und ihrer Temperaturfunktion ab. Diese folgt einer exponentiellen Beziehung :

$$I = a \cdot e^{b\vartheta} + I_o, \qquad (1)$$

wobei

I der Untergrundstrom bei einer Säulentemperatur $\theta$,

$\theta$ die Säulentemperatur,

$I_o$ der vom Detektor, z. B. einem Flammenionisations-detektor, herrührende Untergrundstrom und

a, b säulenspezifische Konstanten sind.

Diese Grundgleichung enthält drei Konstanten, deren Werte unbekannt sind und daher experimentell bestimmt werden müssen. Das geschieht dadurch, daß die Trennsäule bei verschiedenen Temperaturen nach dem in Fig. 2 dargestellten Temperaturprogramm betrieben wird.

Jedes isotherme Zeitintervall während eines Testlaufs entspricht einem bestimmten Untergrundsignal, das leicht ermittelt werden kann. Diese Untergrundsignale sind.

$$I_1 = a \cdot e^{b \cdot \vartheta_1} + I_o$$

$$I_2 = a \cdot e^{b \cdot \vartheta_2} + I_o \qquad (2)$$

$$I_3 = a \cdot e^{b \cdot \vartheta_3} + I_o$$

Es ergibt sich ein Satz von drei Gleichungen mit drei Unbekannten. Nichtsdestoweniger ist es nicht möglich, diese drei unbekannten Konstanten explizit zu berechnen. Die Konstanten müssen mittels eines Iterationsverfahrens ermittelt werden. Die Konstanten b, a und $I_o$ ergeben sich aus den folgenden Gleichungen :

$$b_{i+1} = \frac{1}{\vartheta_2 - \vartheta_1} \ln \left[ \frac{I_3 - I_2}{I_2 - I_1} \cdot \frac{e^{(\vartheta_2 - \vartheta_1) \cdot b_i} - 1}{e^{(\vartheta_3 - \vartheta_2) \cdot b_i} - 1} \right] \qquad (3)$$

$$a = \frac{I_2 - I_1}{e^{\vartheta_1 \cdot b}} \cdot \frac{1}{e^{(\vartheta_2 - \vartheta_1) \cdot b} - 1} \tag{4}$$

$$I_o = I_1 - a \cdot e^{b \cdot \vartheta_1} \tag{5}$$

Fig. 3 zeigt den realen Verlauf der Basislinie bei einem nach dem Programm von Fig. 2 programmierten Testlauf. Die Programmparameter ; wie die Temperaturen, sind aus Fig. 2 bekannt, und die entsprechenden Ströme können aus Fig. 3 abgeleitet werden. Die Werte der Konstanten a, b und $I_o$ können, wie oben angegeben aus der Basislinienabweichung während deer entsprechenden isothermen Zeitintervalle ermittelt werden. Die tatsächliche Form der in Fig. 3 dargestellten abgerundete Basisliniendrift wird durch die Zeitverzögerung bei der Wärmeübertragung vom Ofen auf die Trennsäule hervorgerufen. Wenn man diesen Effekt berücksichtigt, wird es notwendig, die dynamischen Eigenschaften der Trennsäule zu kennen. Zu diesem Zweck werden diese zunächst als dynamisches System mit einem Zeitglied erster Ordnung behandelt, wie das in Fig. 4 dargestellt ist. Wenn der Eingang x eines solchen Systems eine lineare Funktion, z. B. der lineare Programmanstieg ($\theta$ = R. t) ist, dann ergeben sich für den Ausgang y folgende Beziehungen :
Die Laplacetransformierte eines zeitlich linearen Anstiegs Rt ist.

$$\mathcal{L}\{R \cdot t\} = \frac{R}{p^2}$$

wobei
R die Rate des Programmanstiegs
$\alpha$ der Laplacetransformator
und p die Variable der Laplacetransformierten ist.

Ein Zeitglied, das die Zeitverzögerung zwischen Programmtemperatur und tatsächlicher Temperatur in der Trennsäule repräsentiert, entspricht der Multiplikation dieser Laplacetransformierten mit $1/1 + \tau p$. Man erhält also als Laplacetransformierte F(p) des gesuchten Zeitverlaufs der Temperatur in der Trennsäule :

$$\frac{R}{p^2 (1 + \tau p)} = F(p)$$

Durch Umkehrung der Laplacetransformation ergibt sich

$$\mathcal{L}^{-1}\{F(p)\} = R \cdot \tau \left(e^{-\frac{t}{\tau}} + \frac{t}{\tau} - 1\right) = f(t)$$

Aus der Funktion f (t) ergibt sich die tatsächliche Trennsäulentemperatur, die der Ofentemperatur nacheilt, zu

$$\vartheta = \vartheta_1 + R_1 \cdot \tau \left(e^{-\frac{t}{\tau}} + \frac{t}{\tau} - 1\right) \tag{6}$$

Der entsprechende Untergrundstrom ist

$$I = a \cdot e^{b \cdot \left(\vartheta_1 + R_1 \cdot \tau \left(e^{-\frac{t}{\tau}} + \frac{t}{\tau} - 1\right)\right)} + I_o \tag{7}$$

Die Gleichungen (6) und (7) gelten für den ersten Temperaturanstieg ausgehend von dem ersten isothermen Zeitintervall bei der Temperatur $\theta_1$. Der anschließende Temperaturanstieg von dem zweiten isothermen Zeitintervall bei der Temperatur $\theta_2$ mit der Rate $R_2$ des Programmanstiegs wird beschrieben durch

$$I = a \cdot e^{b \cdot \left(\vartheta_2 + R_2 \cdot \tau \left(e^{-\frac{t}{\tau}} + \frac{t}{\tau} - 1\right)\right)} + I_o \tag{8}$$

5

Die Zeitkonstante $\tau$ muß wieder nach einem iterativen Verfahren berechnet werden. Das kann nach der Formel

$$\tau_{i+1} = \frac{1}{R_1}(\vartheta_1 + R_1 \cdot t) + \tau_i \, e^{-\frac{t}{\tau_i}} - \frac{1}{b \cdot R_1} \ln\left(\frac{I - I_o}{a}\right) \tag{9}$$

geschehen oder aus dem zweiten Temperaturanstieg nach der Formel

$$\tau_{i+1} = \frac{1}{R_2}(\vartheta_2 + R_2 \cdot t) + \tau_i \, e^{-\frac{t}{\tau_i}} - \frac{1}{b \cdot R_2} \ln\left(\frac{I - I_o}{a}\right) \tag{10}$$

Am Ende eines Aufheizvorgangs, wenn die Temperatur konstant bleibt, folgt die tatsächliche Trennsäulentemperatur der Ofentemperatur mit einer Zeitverzögerung. Der sich dabei ergebende Untergrundstrom führt zu einer stetigen Kurve, die sich mehr oder weniger langsam, je nach der Zeitkonstante, dem Endwert nähert. Es ist

$$\vartheta = \vartheta_1 - \triangle\vartheta \cdot e^{-\frac{t}{\tau}} \tag{11}$$

was in Fig. 5 graphisch dargestellt ist.

Einsetzen von Gleichung (11) in Gleichung (1) ergibt eine Funktion, welche das wahre Verhalten der Basislinie während der Stabilisierung auf einem neuen Temperaturniveau beschreibt :

$$I = a \cdot e^{b\left(\vartheta_1 - \triangle\vartheta \cdot e^{-\frac{t}{\tau}}\right)} + I_o \tag{12}$$

In der anhängenden Auflistung BASL 1 ist in der Programmiersprache Basic das Programm aufgelistet, das benutzt wird, um die speziellen Trennsäulendaten a, b, $I_0$ und $\tau$ zu berechnen und die Basislinie punktweise neu aufzuzeichnen (entsprechend Rechenschaltung 24 in Fig. 1). In der ebenfalls anhängenden Auflistung BASL 2 ist das Programm aufgelistet, welches benutzt wird, um aus den speziellen Trennsäulendaten und den Parametern des Temperaturprogramms die Basislinie zu berechnen (entsprechend Funktionsgeneratormitteln 26 in Fig. 1).

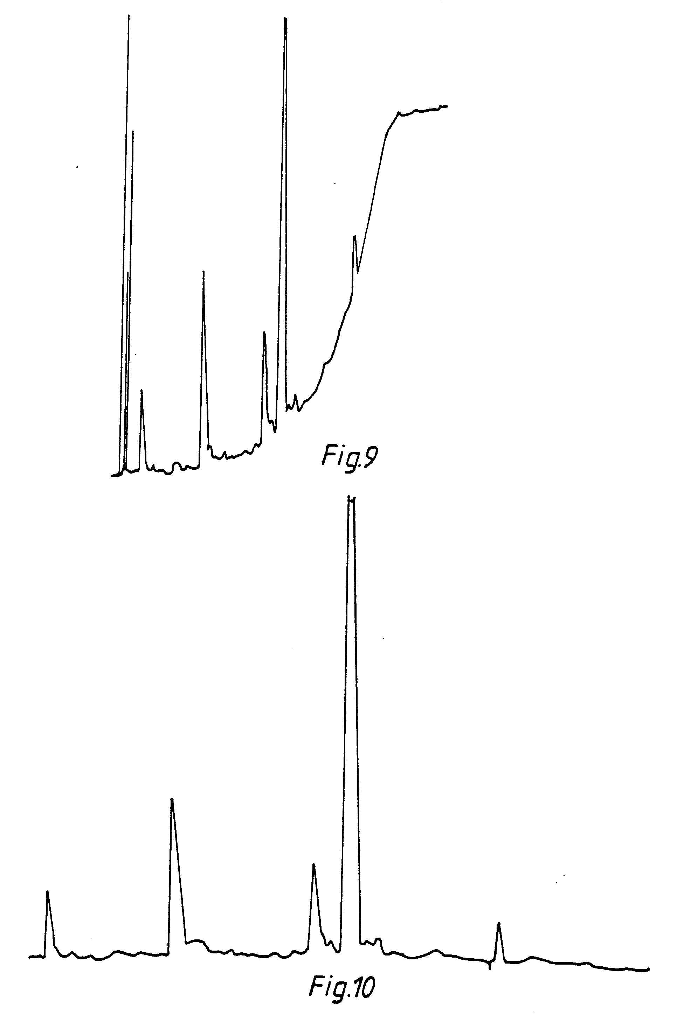

Ergebnisse, die mit einer Einrichtung der beschriebenen Art erzielt wurden, sind in den Figuren 6 bis 10 dargestellt. Fig. 6 bis 8 zeigen für einen « Testlauf » ohne Probe die gute Übereinstimmung zwischen gemessener und berechneter Basislinie. Fig. 9 und 10 zeigt die Kompensation der Basisliniendrift mittels eines in der beschriebenen Weise berechneten Basisliniensignals.

In dem beschriebenen Beispiel ist die Kompensation einer Basisliniendrift beschrieben, die durch ein Temperaturprogramm hervorgerufen ist. Auf ähnliche Weise kann auch eine Basisliniendrift kompensiert werden, die durch ein Strömungsgeschwindigkeitsprogramm hervorgerufen wird.

/BL BASL 1

```
20   OPEN « PP »
30   INPUT C0, C1, C2, R1, R2
40   INPUT T1, T2, T3, T5
50   DEF FNB(01) = (LOG((Y2-Y1)/(Y1-Y0)))/(C1-C0)
55   DEF FND(X1) = (LOG((EXP((C1-C0)*B1))-1)/((EXP((C2-C1)*B1))-1)))/(C1-C0)
60   DEF FNA(B1) = FNB(Q1) + (FND(X1))
80   DEF FNC(Z1) = ((C + R*T9)/R) + (Z1/EXP(T9/Z1))-(LOG(Y-K)/A))/(B2*R)
100  CLOSE « PP »
300  SETUP «   », 1, 1, 1, 10
310  TSLICE «   », 1, 3, 0, T5
320  RUN «   », 1
330  FILE «   », 1, 1, F1, F2
350  « PP »
390  INPUT N1, N2, N3, N4, N5, N6, N7, N8
500  LET I1 = (INT((N1*60)/3)) + 1
510  LET I2 = (INT((N2*60)/3)) — 1
520  GOSUB720
570  LET Y9 = A/((I2-I1) + 1)
580  LET I1 = (INT((N3*60)/3)) + 1.
```

```
590   LET I2 = (INT((N4*60)/3)) — 1
600   GOSUB720
610   LET Y0 = A/((I2-I1) + 1)
620   LET I1 = (INT((N5*60)/3)) + 1
630   LET I2 = (INT((N6*60)/3)) — 1
640   GOSUB720
650   LET Y1 = A/((I2-I1) + 1)
660   LET I1 = (INT((N7*60)/3)) + 1
670   LET I2 = (INT((N8*60)/3)) — 1
680   GOSUB720
690   LET Y2 = A/((I2-I1) + 1)
700   GOTO800
720   LET A = 0
730   FOR I = I1TO I2
740   GSLICE F2, I, A1, T
750   LET A1 = (A1*3)/(6.4*40)
760   LET A = A + A1
770   NEXT I
780   RETURN
800   LET B1 = .09
810   LET B2 = FNA(B1)
820   IF ABS(B2-B1)<1E-6THEN850
830   LET B1 = B2
840   GOTO810
850   LET A = (Y1-Y0)/(((EXP(CO*B2))*(EXP((C1-CO)*B2)-1))
860   LET K = (Y9-Y0)-(A*EXP(B2*CO))
900   LET R = R1
910   LET C = C0
920   LET T9 = ((C1-CO)/R1)*.8
930   LET N = INT(((T1 + T9)*60)/3)
940   GSLICE F2, N, A1, T
950   LET Y = Y9-(2*Y0) + ((A1*3)/(6.4*40))
960   LET Z1 = .8
970   LET Z2 = FNC(Z1)
980   IF ABS(Z2-Z1)(1E-6THEN1010
990   LET Z1 = Z2
1000  GOTO970
1010  LET Z = Z2
1020  LET R = R2
1030  LET C = C1
1040  LET T9 = ((C2-C1)/R2)*.8
1050  LET N = INT(((T1 + ((C1-C0)/R1) + T2 + T9)*60)/3)
1060  GSLICE F2, N, A1, T
1070  LET Y = Y9-(2*Y0) + ((A1*3)/(6.4*40))
1080  LET Z1 = .8
1090  LET Z2 = FNC(Z1)
1100  IF ABS(Z2-Z1)<1E-6THEN1130
1110  LET Z1 = Z2
1120  GOTO1090
1130  LET Z = (Z + Z2)/2
1500  PRINT B2 ; A ; K ; Z
1510  PRINT
1520  PRINT Y9 ; YO ; Y1 ; Y2
1600  LET M1 = (60/(Y2-Y0))*.8
1610  LET N = 1
1620  GSLICE F2, N, A1, T
1625  IF A1<0THEN2000
1630  LET Y = (A1*3)/(6.4*40)
1640  LET U1 = M1*(Y-Y0)
1650  LET U1 = INT(10*U1 + 5)/10
1660  PRINT TAB(5 + U1) ; « + » ; «   » ; T
1670  LET N = N + 11
1680  GOTO1620
2000  END
OK
```

7

/BL BASL 2

```
5    OPEN « PP »
10   INPUT C0, C1, C2, R1, R2
20   INPUT T1, T2, T3, T5
30   INPUT B2, A, K, Z
40   INPUT Y0, Y2
100  LET M1 = (60/(Y2-Y0))*.8
200  FOR I = 0TO(T1*60) STEP33
210  LET Y = (A*EXP(B2*CO))
220  LET U1 = M1*Y
230  LET U1 = INT(10*U1 + 5)/10
240  PRINT TAB(5 + U1) ; « + » ; «      » ; I/60
250  NEXT I
260  LET T8 = I/60
265  LET T = T8-T1
280  LET Y = A*EXP(B2*(C0 + (R1*Z)*(EXP(-T/Z) + (T/Z)-1)))
290  LET U1 = M1*Y
300  LET U1 = INT((10*U1 + 5)/10)
310  PRINT TAB(5 + U1) ; « + » ; «     « : T + T1
312  LET T = T + .55
314  IF T>((C1-C0)/R1)THEN330
320  GOTO280
330  LET T8 = (C1-C0)/R1
340  LET C9 = C0 + ((R1*Z)*(EXP(-T8/Z) + (T8/Z)-1))
360  LET T = T-T8
370  LET D = (C1-C9)*(1EXP(-T/Z))
380  LET C = C9 + D
390  LET Y = (A*EXP(B2*C))
400  LET U1 = M1*Y
410  LET U1 = INT((10*U1 + 5)/10)
420  PRINT TAB(5 + U1) ; « + » ; «     » ; T1 +((C1-C0)/R1) + T
430  LET T = T + .55
440  IF T>T2THEN460
450  GOTO370
460  LET T = T-T2
470  LET Y = A*EXP(B2*C1 + (R2*Z)*(EXP(-T/Z) + (T/Z)-1)))
480  LET U1 = M1*Y
490  LET U1 = INT((10*U1 + 5)/10)
500  PRINT TAB(5 + U1) ; « + » ; «     » ; T1 + ((C1-C0)/R1) + T2 + T
510  LET T = T + .55
520  IF T>((C2-C1)/R2)THEN540
530  GOTO470
540  LET T8 = (C2-C1)/R2
550  LET C9 = C1 + ((R2*Z)*(EXP(-T8/Z) + (T8/Z-1))
560  LET T = T-T8
570  LET D = (C2-C9)*(1-EXP(-T/Z))
580  LET C = C9 + D
590  LET Y = (A*EXP(B2*C))
600  LET U1 = M1*Y
610  LET U1 = INT((10*U1 + 5)/10)
620  PRINT TAB(5 + U1) ; « + » ; «     « : T1 + ((C1-C0)/R1) + T2 + ((C2-C1)/R2) + T
630  LET T = T + .55
640  IF T>T3THEN5000
650  GOTO570
5000 END
OK
```

**Patentanspruch**

Einrichtung zur Kompensation der Basisliniendrift einer chromatographischen Trennsäule während eines Temperatur- und/oder Strömungsprogrammes, enthaltend

(a) Programmgebermittel, durch welche die Trennsäule (10) mit vorgebbaren Temperatur- und/oder Strömungsprogrammen beaufschlagbar ist,

(b) Testlaufmittel (18) zur Erzeugung eines ersten Temperatur- und/oder Strömungsprogrammes ohne Probenaufgabe zur Bestimmung einer für die Trennsäule (10) charakteristischen Temperatur- und strömungsabhängigen Basislinie,

(c) einen Speicher, in welchem Daten dieser so bestimmten Basislinie speicherbar sind und

(d) differenzbildende Mittel (22), auf welche bei anschließender Durchführung eines zweiten Temperatur- und/oder Strömungsprogrammes mit Probenaufgabe und mit der gleichen Trennsäule (10)

ein dem Ausgang der Trennsäule (10) entsprechendes Meßsignal sowie

ein aus den gespeicherten Daten gewonnenes Basisliniensignal zur Korrektur des Meßsignals aufschaltbar ist,

gekennzeichnet durch

(a) Rechnermittel (24)

auf welche von den Testlaufmitteln (18) die Programmparameter des ersten Temperatur- und/oder Strömungsprogrammes sowie

das mit diesem Temperatur- und Strömungsprogramm ohne Probenaufgabe erhaltene, unkorrigierte Basisliniensignal aufgeschaltet sind und

welche zur Berechnung trennsäulenspezifischer Parameter a, b, $\tau$, $I_0$ der den Verlauf des Basisliniensignals darstellenden analytischen Funktion von bekannter Form eingerichtet ist, und

(b) Funktionsgeneratormittel (26),

auf welche die von den Rechnermitteln (24) berechneten, trennsäulenspezifischen Parameter a, b, $\tau$, $I_0$ aufschaltbar sind und

durch welche das Basisliniensignal als die besagte analytische Funktion der Zeit t, der Programmparameter $\theta_1$, $\theta_2$, $\theta_3$, $t_1$, $t_2$, $t_3$, $R_1$, $R_2$ des von den Programmgebermitteln bestimmten Temperatur- und/oder Strömungsprogrammes und der trennsäulenspezifischen Parameter a, b, $\tau$, $I_0$ darstellbar ist.

## Claim

Device for the compensation of the baseline drift of a chromatographic separating column during a temperature and/or flow program, comprising

(a) programmer means, which are arranged to subject the separating column (10) to predetermable temperature and/or flow programs,

(b) test run means (18) for providing a first temperature and/or flow program without sample feeding for determination of a baseline depending on the temperature and on the flow and characteristic for the separating column (10),

(c) a memory arranged to memorize data of the baseline thus determined, and

(d) difference forming means (22), to which, during the subsequent execution of a second temperature and/or flow program with sample feeding and with the same separating column (10),

a measuring signal corresponding to the output of the separating column (10) and

a baseline signal obtained from the memorized data for correction of the measuring signal are adapted to be applied,

characterized by

(a) computer means (24),

to which the program parameters of the first temperature and/or flow program are applied by the test run means (18), and

to which the uncorrected baseline signal obtained with this temperature and/or flow program without sample feeding is applied, and

which are arranged to calculate parameters a, b, $\tau$, $I_0$, specific for the separating column of the analytic function of known form, which represents the course of the baseline signal, and

(b) function generator means (26),

to which the parameters a, b, $\tau$, $I_0$, specific for the separating column and calculated by the computer means (24) are adapted to be applied, and

which are arranged to illustrate the baseline signal as said analytic function of time t of the program parameters $\theta_1$, $\theta_2$, $\theta_3$, $t_1$, $t_2$, $t_3$, $R_1$, $R_2$ of the temperature and/or flow program determined by the program supply means and of the parameters a, b, $\tau$, $I_0$, specific for the separating column.

## Revendication

Dispositif destiné à compenser le dérivé de ligne de base d'une colonne à fractionner chromatographique lors d'un programme de température et/ou de courant, comprenant

(a) des moyens programmateurs disposés à appliquer des programmes de température et/ou de courant prédéterminables à la colonne à fractionner (10),

(b) des moyens de course d'essai (18) destinés à engendrer un premier programme de température et/ou de courant sans alimentation d'échantillon afin de déterminer une ligne de base dépendant de la température et du courant et qui est caractéristique de la colonne à fractionner (10),

(c) une mémoire disposée à mémoriser les données de la ligne de base ainsi déterminée, et

(d) des moyens formant la différence (22) auxquels, lorsqu'un deuxième programme de température et/ou de courant est par la suite réalisé avec alimentation d'échantillon et même colonne à fractionner (10), est appliquable

un signal de mesure représentant la sortie de la colonne à fractionner (10), et

un signal de ligne de base obtenu par les données mémorisées et destiné à la correction du signal de mesure,

caractérisé par

(a) des moyens calculateurs (24)

auxquels sont appliqués par les moyens de course d'essai (18) les paramètres de programme du premier programme de température et/ou de courant, et

le signal de ligne de base non corrigé obtenu avec ce programme de température et de courant sans alimentation d'échantillon, et

qui sont adaptés à calculer des paramètres spécifiques à la colonne à fractionner a, b, $\tau$, $I_0$ de la fonction analytique représentant l'allure du signal de ligne de base et ayant une forme connue, et

(b) des moyens générateurs de fonction (26)

auxquels sont applicables les paramètres spécifiques à la colonne à fractionner a, b, $\tau$, $I_0$ calculés par les moyens calculateurs (24), et

par lesquels le signal de ligne de base peut être représenté comme ladite fonction analytique du temps t des paramètres de programme $\theta_1$, $\theta_2$, $\theta_3$, $t_1$, $t_2$, $t_3$, $R_1$, $R_2$ du programme de température et/ou de courant déterminé par les moyens programmateurs et des paramètres spécifiques à la colonne à fractionner a, b, $\tau$, $I_0$.

Fig.1

Trennsäule 10

Detektor 12

Verstärker 14

Analog / Digital 16

22

Funktions-generator-mittel 26

28

20

Testlauf-schaltung 18

Rechen-schaltung 24

$Z_1, Z_2, Z_3$
$t_1, t_2, t_3$
$R_1, R_2$

0 130 574

Fig.2

Fig.3

$$\frac{1}{1 \; + \; \tau \cdot p}$$

X → → Y

Fig.4

$R_1$

$\vartheta_1$

$\triangle \vartheta$

$\vartheta_1$

$I_2$

$t_1$

*Fig.5*

Intervalle konstanter Temperatur

°C

Anstiegsrate

130   6

20

100   5

8

70

3   6,75  12,75  14,25  20,25

*Fig.6*

min

*Fig.7*

*Fig.8*

0 130 574

Fig.9

Fig.10

4